# EUROPEAN PATENT SPECIFICATION

(11) **EP 2 620 876 B1**
(45) Date of publication and mention of the grant of the patent: **24.01.2018**
(21) Application number: 11857907.7
(22) Date of filing: 09.12.2011
(51) Int. Cl.: G06F 13/16, G06F 3/06

(54) **METHOD AND APPARATUS FOR DATA PROCESSING, PCI-E BUS SYSTEM AND SERVER**
VERFAHREN UND VORRICHTUNG ZUR DATENVERARBEITUNG, PCI-E-BUSSYSTEM UND SERVER
PROCÉDÉ ET APPAREIL SERVANT À TRAITER DES DONNÉES, SYSTÈME DE BUS PCI-E ET SERVEUR

(30) Priority: 04.07.2011 CN 201110185059
(43) Date of publication of application: 31.07.2013
(73) Proprietor: Huawei Technologies Co., Ltd., Longgang District Shenzhen, Guangdong 518129 (CN)
(72) Inventor: FANG, Fan, Shenzhen Guangdong 518129 (CN); YU, Baifeng, Shenzhen Guangdong 518129 (CN)
(74) Representative: Goddar, Heinz J.
(86) International application number: PCT/CN2011/083754
(87) International publication number: WO 2012/103768

(56) References cited:
- WO-A1-2010/050092
- WO-A2-2006/113134
- WO-A2-2010/033375
- CN-A- 101 178 697
- CN-A- 101 281 453
- CN-A- 101 639 930
- US-A1- 2007 280 278
- US-A1- 2009 271 590

## Description

### FIELD OF THE INVENTION

Embodiments of the present invention relate to communications technologies, and particularly, to a data processing method and apparatus, an expansion peripheral component interconnect express (Peripheral Component Interconnect Express, referred to as PCI-E) bus system, and a server.

### BACKGROUND OF THE INVENTION

Generally, a server may include a plurality of central processing units (Central Processing Unit, referred to as CPU), and each of the CPUs is interconnected in the form of a bus, where a CPU may be connected to a device, that is, a PCI-E device, through a PCI-E bus system. The PCI-E device stores data received by the PCI-E device in a memory of the CPU according to obtained address information of the memory of the CPU.

However, when another CPU needs to access the data, it needs to access the data stored in the memory, through a bus between the another CPU and the CPU that corresponds to the memory that stores the received data, and a bus between the CPU and the memory that corresponds to the CPU. Therefore, a part of a bandwidth of the bus between the another CPU and the CPU is occupied, and a bus through which the CPU accesses the memory that corresponds the CPU is occupied, thereby reducing a utilization rate of the CPU.

WO 2006/113134 A2 describes a switching interface comprising a switch having an input and a plurality of outputs, and a memory associated with the switch. The switch is adapted to receive a packet from the input, the packet to be forwarded to a destination device coupled to a one of the plurality of outputs and the switch is responsive to store the packet in the associated memory. The switch is responsive to a signal from the destination device to forward the packet from the associated memory to the destination device through the one of the plurality of outputs. The switch can be a PCIe switch. The switching interface may further comprise a packet encryption engine coupled between the input and the associated memory. The output devices coupled to the plurality of outputs can each have its own separate encryption, and in these scenarios the encryption engine will have logic for determining the appropriate encryption for the output device. The packet encryption engine may employ a hardware assist for performance enhancement

### SUMMARY OF THE INVENTION

Embodiments of the present invention provide a data processing method and apparatus, a PCI-E bus system, and a server, so as to improve a utilization rate of a CPU.

In one aspect, an embodiment of the present invention provides a data processing method, including:
configuring, by an operating system, address information of a PCI-E memory of multiple PCI-E devices, so that each of the PCI-E devices stores data received by the PCI-E device in the PCI-E memory;
determining, by the operating system, a CPU of a plurality of CPUs that is used for accessing the data stored in the PCI-E memory by pre-specifying the CPU that is used for accessing the data stored in the PCI-E memory; and
controlling, by the operating system, the CPU to access the data stored in the PCI-E memory, so that the CPU processes the data.

In another aspect, an embodiment of the present invention provides a data processing apparatus, including:
a configuring unit, configured to configure address information of a PCI-E memory of multiple PCI-E devices, so that each of the multiple PCI-E devices stores data received by the PCI-E device in the PCI-E memory;
a determining unit, configured to: determine a CPU
of a plurality of CPUs that is used for accessing the data by pre-specifying the CPU that is used for accessing the data stored in the PCI-E memory; and
a controlling unit, configured to control the CPU to access the data stored in the PCI-E memory, so that the CPU processes the data.

In another aspect, an embodiment of the present invention provides a PCI-E bus system, including a PCI-E memory and the foregoing data processing apparatus, where the PCI-E memory is configured to store data received by the PCI-E device.

In another aspect, an embodiment of the present invention provides a server, including a CPU and the foregoing PCI-E bus system, where the CPU is configured to access the data stored in the PCI-E memory, and process the data.

It can be seen from the foregoing technical solutions, in the embodiments of the present invention, the address information of the PCI-E memory of the PCI-E device is configured, so that after the PCI-E device stores the data received by the PCI-E device in the PCI-E memory, the CPU can be controlled to access the data stored in the PCI-E memory. This can avoid a problem that in the prior art, because the PCI-E device stores the data received by the PCI-E in a memory of the CPU, when the data stored in the memory of the CPU is accessed by another CPU, a part of a bandwidth of a bus between the another CPU and the CPU is occupied and a bus through which the CPU accesses the memory that corresponds the CPU is occupied, thereby improving a utilization rate of the CPU.

### BRIEF DESCRIPTION OF THE DRAWINGS

To describe the technical solutions in the embodiments of the present invention or in the prior art more clearly, the accompanying drawings required for describing the embodiments or the prior art are briefly introduced in the following. Evidently, the accompanying drawings in the following description are some embodiments of the present invention, and persons of ordinary skill in the art may also obtain other drawings according to these accompanying drawings without creative efforts.
FIG. 1 is a schematic flowchart of a data processing method according to an embodiment of the present invention;
FIG. 2 is a schematic structural diagram of a PCI-E bus system involved in an embodiment corresponding to FIG. 1;
FIG. 3 is a schematic structural diagram of a data processing apparatus according to another embodiment of the present invention;
FIG. 4 is a schematic structural diagram of a data processing apparatus according to another embodiment of the present invention;
FIG. 5 is a schematic structural diagram of a PCI-E bus system according to another embodiment of the present invention; and
FIG. 6 is a schematic structural diagram of a server according to another embodiment of the present invention.

### DETAILED DESCRIPTION OF THE EMBODIMENTS

In order to make the objectives, technical solutions, and advantages of the embodiments of the present invention clearer, the technical solutions in the embodiments of the present invention are described clearly and completely in the following with reference to the accompanying drawings in the embodiments of the present invention. Evidently, the embodiments to be described are only a part rather than all of the embodiments of the present invention. Based on the embodiments of the present invention, other embodiments that are obtained by persons of ordinary skill in the art without creative efforts all fall within the protection scope of the present invention.

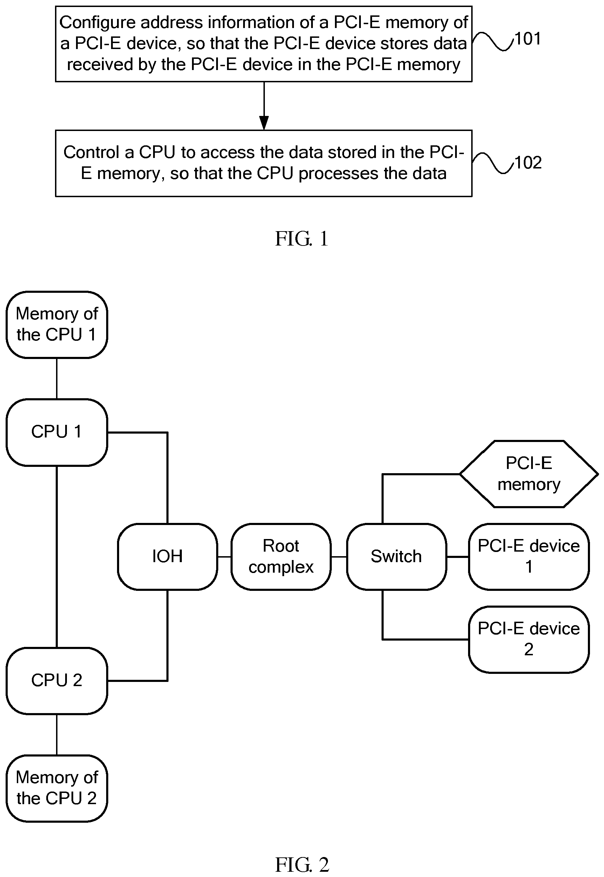

FIG. 1 is a schematic flowchart of a data processing method according to an embodiment of the present invention. As shown in FIG. 1, the data processing method in this embodiment may include:
101: Configure address information of a PCI-E memory of a PCI-E device, so that the PCI-E device stores data received by the PCI-E device in the PCI-E memory.
102: Control a CPU to access the data stored in the PCI-E memory, so that the CPU processes the data.

An executor of 101 and 102 may be an operating system.

Further, before 102, the operating system may also determine the CPU that is used for accessing the data by pre-specifying the CPU (for example, a main CPU) that is used for accessing the data stored in the PCI-E memory. For a specific determining method, reference may be made to relevant contents in the prior art, which is not repeated here.

Optionally, in 102, the determined CPU may be specifically controlled to access, according to the address information of the PCI-E memory, the data stored in the PCI-E memory.

Optionally, in 102, the data stored in the PCI-E memory may be specifically copied into a memory of the determined CPU, and the determined CPU may be controlled to access the data stored in the memory of the determined CPU.

Optionally, the PCI-E memory may be located on a PCI-E bus, that is, the PCI-E memory may be set in front of a switch (Switch). Optionally, the PCI-E memory may also be connected to the PCI-E bus, that is, the PCI-E memory may be similar to a PCI-E device and behind the switch (Switch), and may be connected to the CPU through a bus.

In this embodiment, the address information of the PCI-E memory of the PCI-E device is configured, so that after the PCI-E device stores the data received by the PCI-E device in the PCI-E memory, the CPU can be controlled to access the data stored in the PCI-E memory. This can avoid a problem that in the prior art, because the PCI-E device stores the data received by the PCI-E device in a memory of the CPU, when the data stored in the memory of the CPU is accessed by another CPU, a part of a bandwidth of a bus between the another CPU and the CPU is occupied and a bus through which the CPU accesses the memory that corresponds the CPU is occupied, thereby improving a utilization rate of the CPU.

To make the method provided in this embodiment of the present invention clearer, a PCI-E bus system as shown in FIG. 2 is taken as an example in the following. In the PCI-E bus system as shown in FIG. 2, a CPU 1 is connected to a CPU 2 through a quick path interconnect (Quick Path Interconnect, referred to as QPI) bus; the CPU 1 and the CPU 2 are connected to an input output hub (Input Output Hub, referred to as IOH) through the QPI bus; the IOH is connected to a switch (Switch) through a root complex (Root Complex); and the switch (Switch) is connected to a PCI-E device 1, a PCI-E device 2, and a PCI-E memory. First, an operating system running on the CPU 1 and an operating system running on the CPU 2 configure address information of a PCI-E memory of the PCI-E device 1 and address information of a PCI-E memory of the PCI-E device 2, so that the PCI-E device 1 or the PCI-E device 2 stores data received by the PCI-E device 2 in the PCI-E memory. Then, the operating system controls the CPU 1 to access the data stored in the PCI-E memory, so that the CPU 1 processes the data. The CPU 1 may further transfer information through the QPI bus between the CPU 1 and the CPU 2 at the same time when the CPU 1 accesses the data stored in the PCI-E memory. The CPU 1 does not occupy a bandwidth of the QPI bus between the CPU 1 and the CPU 2 when accessing the data stored in the PCI-E memory. In addition, the CPU 2 may also access other data stored in its corresponding memory at the same time when the CPU 1 accesses the data stored in the PCI-E memory, thereby improving utilization rates of the CPU 1 and the CPU 2.

It should be noted that, for simple description, the foregoing method embodiments are expressed as a series of actions. But those skilled in the art should know that the present invention is not limited to an order of described actions, because according to the present invention, some steps may be performed in another order or be performed simultaneously. Next, those skilled in the art should also know that all the embodiments described in the specification are exemplary embodiments, and that involved actions and modules are not necessarily required in the present invention.

In the foregoing embodiments, the description of each embodiment has its emphasis, and for a part that is not detailed in a certain embodiment, reference may be made to the relevant description of another embodiment.

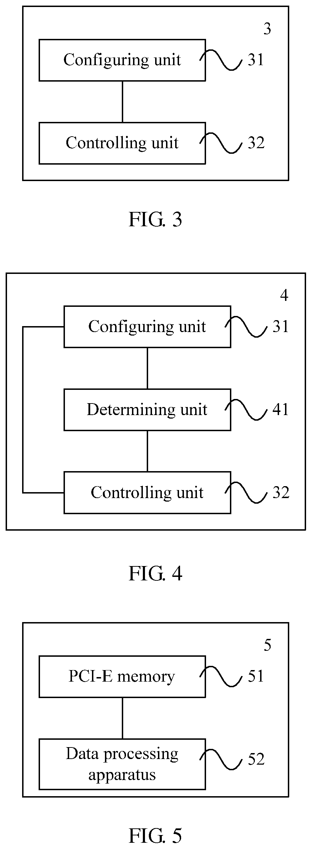

FIG. 3 is a schematic structural diagram of a data processing apparatus according to another embodiment of the present invention. As shown in FIG. 3, a data processing apparatus 3 in this embodiment may include a configuring unit 31 and a controlling unit 32. The configuring unit 31 is configured to configure address information of a PCI-E memory of a PCI-E device, so that the PCI-E device stores data received by the PCI-E device in the PCI-E memory; and the controlling unit 32 is configured to control a CPU to access the data stored in the PCI-E memory, so that the CPU processes the data.

The method in the foregoing embodiment corresponding to FIG. 1 may be implemented by the data processing apparatus provided in this embodiment.

Further, as shown in FIG. 4, a data processing apparatus 4 in this embodiment may further include a determining unit 41, configured to determine the CPU that is used for accessing the data by pre-specifying the CPU that is used for accessing the data stored in the PCI-E memory, so that the controlling unit 32 controls the CPU determined by the determining unit 41 to access the data stored in the PCI-E memory.

Optionally, the controlling unit 32 in this embodiment may specifically control the CPU to access, according to the address information of the PCI-E memory, the data stored in the PCI-E memory.

Optionally, the controlling unit 32 in this embodiment may also specifically copy the data stored in the PCI-E memory into a memory of the CPU, and control the CPU to access the data stored in the memory of the CPU.

Optionally, the PCI-E memory may be located on a PCI-E bus, that is, the PCI-E memory may be set in front of a switch (Switch). Optionally, the PCI-E memory may also be connected to the PCI-E bus, that is, the PCI-E memory may be similar to a PCI-E device and behind the switch (Switch), and may be connected to the CPU through a bus.

In this embodiment, the address information of the PCI-E memory of the PCI-E device is configured by the configuring unit, so that after the PCI-E device stores the data received by the PCI-E device in the PCI-E memory, the controlling unit can control the CPU to access the data stored in the PCI-E memory. This can avoid a problem that in the prior art, because the PCI-E device stores the data received by the PCI-E device in a memory of the CPU, when the data stored in the memory of the CPU is accessed by another CPU, a part of a bandwidth of a bus between the another CPU and the CPU is occupied and a bus through which the CPU accesses the memory that corresponds the CPU is occupied, thereby improving a utilization rate of the CPU.

FIG. 5 is a schematic structural diagram of a PCI-E bus system 5 according to another embodiment of the present invention. As shown in FIG. 5, the PCI-E bus system in this embodiment may include a PCI-E memory 51, and a data processing apparatus 52 provided in the embodiment corresponding to FIG. 3 or FIG. 4, where the PCI-E memory 51 is configured to store data received by the PCI-E device.

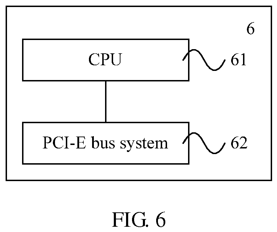

FIG. 6 is a schematic structural diagram of a server 6 according to another embodiment of the present invention. As shown in FIG. 6, the server in this embodiment may include a CPU 61, and a PCI-E bus system 62 provided in the embodiment corresponding to FIG. 5, where the CPU 61 is configured to access the data stored in the PCI-E memory, and process the data.

Those skilled in the art may clearly understand that, to describe conveniently and simply, for specific working processes of the system, the apparatus, and the unit described in the foregoing, reference may be made to corresponding processes in the foregoing method embodiments, which are not repeated here.

In several embodiments of the present invention, it should be understood that the disclosed system, apparatus, and method may be implemented in other ways. For example, the apparatus embodiments described in the following are only exemplary, for example, the unit division is only logic function division, and there may be other division ways during practical implementation, for example, multiple units or components may be combined or integrated into another system, or some features may be omitted or may not be executed. In addition, the shown or discussed mutual couplings or direct couplings or communication connections may be implemented through some interfaces. Indirect couplings or communication connections between apparatuses or units may be electrical, mechanical, or in other forms.

The units described as separated parts may or may not be physically separated from each other, and the parts shown as units may or may not be physical units, that is, they may be located at the same place, and may also be distributed to multiple network elements. A part or all of the units may be selected according to an actual requirement to achieve the objectives of the solutions in the embodiments.

In addition, function units in the embodiments of the present invention may be integrated into a processing unit, each of the units may also exist separately and physically, and two or more units may also be integrated into one unit. The integrated unit may be implemented in the form of hardware, and may also be implemented in the form of a software function unit.

If the integrated unit is implemented in the form of a software function unit and is sold or used as an independent product, it may be stored in a computer readable storage medium. Based on such understanding, the technical solutions of the present invention essentially, or the part contributing to the prior art, or all or a part of the technical solutions may be implemented in the form of a software product. The computer software product is stored in a storage medium and includes several instructions for instructing a computer device (which may be a personal computer, a server, or a network device, and so on.) to execute all or a part of steps of the methods described in the embodiments of the present invention. The storage medium includes: any medium that is capable of storing program codes, such as a USB-disk, a removable hard disk, a read-only memory (Read-Only Memory, referred to as ROM), a random access memory (Random Access Memory, referred to as RAM), a magnetic disk, or an optical disk.

## Claims

1. A data processing method, comprising:
configuring (101), by an operating system, address information of a Peripheral Component Interconnect Express (PCI-E) memory of multiple PCI-E devices, so that each of the multiple PCI-E devices stores data received by the PCI-E device in the PCI-E memory;
determining, by the operating system, a Central Processing Unit (CPU) of a plurality of CPUs that is used for accessing the data stored in the PCI-E memory by pre-specifying the CPU that is used for accessing the data stored in the PCI-E memory; and
controlling (102), by the operating system, the CPU to access the data stored in the PCI-E memory, so that the CPU processes the data.

2. The method according to claim 1, wherein the controlling the CPU to access the data stored in the PCI-E memory comprises:
controlling the CPU to access, according to the address information of the PCI-E memory, the data stored in the PCI-E memory; or
copying the data stored in the PCI-E memory into a memory of the CPU, and controlling the CPU to access the data stored in the memory of the CPU.

3. The method according to claim 1 or 2, wherein the PCI-E memory is located on a PCI-E bus or connected to the PCI-E bus.

4. A data processing apparatus, comprising:
a configuring unit (31), configured to configure address information of a Peripheral Component Interconnect Express (PCI-E) memory of multiple PCI-E devices, so that each of the multiple PCI-E devices stores data received by the PCI-E device in the PCI-E memory;
a determining unit (41), configured to: determine a CPU of a plurality of CPUs that is used for accessing the data by pre-specifying the CPU that is used for accessing the data stored in the PCI-E memory; and
a controlling unit (32), configured to control the CPU to access the data stored in the PCI-E memory, so that the CPU processes the data.

5. The apparatus according to claim 4, wherein the controlling unit is specifically configured to:
control the CPU to access, according to the address information of the PCI-E memory, the data stored in the PCI-E memory; or
copy the data stored in the PCI-E memory into a memory of the CPU, and control the CPU to access the data stored in the memory of the CPU.

6. The apparatus according to claim 4 or 5, wherein the PCI-E memory is located on a PCI-E bus or connected to the PCI-E bus.

7. A PCI-E bus system, comprising a PCI-E memory and the data processing apparatus according to any one of claims 4 to 6, wherein the PCI-E memory (51) is configured to store data received by the PCI-E device.

8. A server, comprising a CPU and the PCI-E bus system according to claim 7, wherein the CPU (61) is configured to access the data stored in the PCI-E memory, and process the data.

## Patentansprüche

1. Datenverarbeitungsverfahren, umfassend:
derartiges Konfigurieren (101) von Adressinformationen eines PCI-E(Peripheral Component Interconnect Express)-Speichers mehrerer PCI-E-Vorrichtungen durch ein Betriebssystem, dass jede der mehreren PCI-E-Vorrichtungen Daten, die durch die PCI-E-Vorrichtung empfangen werden, im PCI-E-Speicher speichert;
Bestimmen einer zentralen Verarbeitungseinheit (CPU) einer Vielzahl von CPUs, die zum Zugreifen auf die im PCI-E-Speicher gespeicherten Daten verwendet wird, durch das Betriebssystem, indem es die CPU, die zum Zugreifen auf die im PCI-E-Speicher gespeicherten Daten verwendet wird, im Voraus spezifiziert; und
derartiges Steuern (102) der CPU zum Zugreifen auf die im PCI-E-Speicher gespeicherten Daten durch das Betriebssystem, dass die CPU die Daten verarbeitet.

2. Verfahren nach Anspruch 1, wobei das Steuern der CPU zum Zugreifen auf die im PCI-E-Speicher gespeicherten Daten Folgendes umfasst:
Steuern der CPU zum Zugreifen auf die im PCI-E-Speicher gespeicherten Daten gemäß den Adressinformationen des PCI-E-Speichers; oder
Kopieren der im PCI-E-Speicher gespeicherten Daten in einen Speicher der CPU und Steuern der CPU zum Zugreifen auf die im Speicher der CPU gespeicherten Daten.

3. Verfahren nach Anspruch 1 oder 2, wobei der PCI-E-Speicher sich auf einem PCI-E-Bus befindet oder mit dem PCI-E-Bus verbunden ist.

4. Datenverarbeitungsvorrichtung, umfassend:
eine Konfigurationseinheit (31), die so konfiguriert ist, dass sie Adressinformationen eines PCI-E(Peripheral Component Interconnect Express)-Speichers mehrerer PCI-E-Vorrichtungen derart konfiguriert, dass jede der mehreren PCI-E-Vorrichtungen Daten, die durch die PCI-E-Vorrichtung empfangen werden, im PCI-E-Speicher speichert;
eine Bestimmungseinheit (41), die konfiguriert ist zum: Bestimmen einer CPU einer Vielzahl von CPUs, die zum Zugreifen auf die Daten verwendet wird, indem es die CPU, die zum Zugreifen auf die im PCI-E-Speicher gespeicherten Daten verwendet wird, im Voraus spezifiziert; und
eine Steuereinheit (32), die so konfiguriert ist, dass sie die CPU zum Zugreifen auf die im PCI-E-Speicher gespeicherten Daten so steuert, dass die CPU die Daten verarbeitet.

5. Vorrichtung nach Anspruch 4, wobei die Steuereinheit insbesondere konfiguriert ist zum:
Steuern der CPU zum Zugreifen auf die im PCI-E-Speicher gespeicherten Daten gemäß den Adressinformationen des PCI-E-Speichers; oder
Kopieren der im PCI-E-Speicher gespeicherten Daten in einen Speicher der CPU und Steuern der CPU zum Zugreifen auf die im Speicher der CPU gespeicherten Daten.

6. Vorrichtung nach Anspruch 4 oder 5, wobei der PCI-E-Speicher sich auf einem PCI-E-Bus befindet oder mit dem PCI-E-Bus verbunden ist.

7. PCI-E-Bussystem, umfassend einen PCI-E-Speicher und die Datenverarbeitungsvorrichtung nach einem der Ansprüche 4 bis 6, wobei der PCI-E-Speicher (51) so konfiguriert ist, dass er Daten speichert, die durch die PCI-E-Vorrichtung empfangen werden.

8. Server, umfassend eine CPU und das PCI-E-Bussystem nach Anspruch 7, wobei die CPU (61) so konfiguriert ist, dass sie auf die im PCI-E-Speicher gespeicherten Daten zugreift und die Daten verarbeitet.

## Revendications

1. Procédé de traitement de données, consistant à :
configurer (101), par un système d'exploitation, une information d'adresse d'une mémoire d'interconnexion de composants périphériques express (PCI-E) de multiples dispositifs PCI-E, de sorte que chacun des multiples dispositifs PCI-E stocke les données reçues par le dispositif PCI-E dans la mémoire PCI-E ;
déterminer, par le système d'exploitation, une unité centrale de traitement (CPU) utilisée, parmi une pluralité de CPU, pour accéder aux données stockées dans la mémoire PCI-E en spécifiant au préalable la CPU utilisée pour accéder aux données stockées dans la mémoire PCI-E ; et
contrôler (102), par le système d'exploitation, la CPU utilisée pour accéder aux données stockées dans la mémoire PCI-E, de sorte que la CPU traite les données.

2. Procédé selon la revendication 1, dans lequel le contrôle de la CPU pour accéder aux données stockées dans la mémoire PCI-E consiste à :
contrôler la CPU pour accéder, selon l'information d'adresse de la mémoire PCI-E, aux données stockées dans la mémoire PCI-E ; ou
copier les données stockées dans la mémoire PCI-E dans une mémoire de la CPU, et contrôler la CPU pour accéder aux données stockées dans la mémoire de la CPU.

3. Procédé selon la revendication 1 ou 2, dans lequel la mémoire PCI-E est située sur un bus PCI-E ou est connectée au bus PCI-E.

4. Appareil de traitement de données, comprenant :
une unité de configuration (31), conçue pour configurer une information d'adresse d'une mémoire d'interconnexion de composants périphériques express (PCI-E) de multiples dispositifs PCI-E, de sorte que chacun des multiples dispositifs PCI-E stocke les données reçues par le dispositif PCI-E dans la mémoire PCI-E ;
une unité de détermination (41), conçue pour déterminer une CPU utilisée, parmi une pluralité de CPU, pour accéder aux données en spécifiant au préalable la CPU utilisée pour accéder aux données stockées dans la mémoire PCI-E ; et
une unité de contrôle (32), conçue pour contrôler la CPU utilisée pour accéder aux données stockées dans la mémoire PCI-E, de sorte que la CPU traite les données.

5. Appareil selon la revendication 4, dans lequel l'unité de contrôle est spécialement conçue pour :
contrôler la CPU pour accéder, selon l'information d'adresse de la mémoire PCI-E, aux données stockées dans la mémoire PCI-E ; ou
copier les données stockées dans la mémoire PCI-E dans une mémoire de la CPU, et contrôler la CPU pour accéder aux données stockées dans la mémoire de la CPU.

6. Appareil selon la revendication 4 ou 5, dans lequel la mémoire PCI-E est située sur un bus PCI-E ou est connectée au bus PCI-E.

7. Système de bus PCI-E, comprenant une mémoire PCI-E et l'appareil de traitement de données selon l'une quelconque des revendications 4 à 6, dans lequel la mémoire PCI-E (51) est conçue pour stocker des données reçues par le dispositif PCI-E.

8. Serveur, comprenant une CPU et le système de bus PCI-E selon la revendication 7, dans lequel la CPU (61) est conçue pour accéder aux données stockées dans la mémoire PCI-E, et traiter les données.
